# EUROPEAN PATENT APPLICATION

(11) **EP 3 597 402 A1**
(43) Date of publication of application: **22.01.2020**
(21) Application number: 18184733.6
(22) Date of filing: 20.07.2018
(51) Int. Cl.: B29C 64/165, B33Y 10/00, B33Y 80/00, B33Y 70/00

(54) **3D PRINTING PROCESS, USE OF AT LEAST ONE HALOGENATED ALCOHOL AND 3D PRINTED PLASTIC OBJECT**

(71) Applicant: Technische Universität München, 80333 München (DE)
(72) Inventor: ABSTREITER, Tobias, 84435 Lengdorf (DE)
(74) Representative: Hoefer & Partner Patentanwälte mbB

(57) **Abstract**

The present invention concerns a 3D printing process of 3D printing a plastic object comprising the steps of: applying at least one powdery polymeric plastic material (100) onto a construction platform and applying at least one halogenated alcohol (200) on the at least one powdery polymeric plastic material using a jetting process.

## Description

The present invention concerns a 3D printing process of 3D printing a plastic object, a use of at least one halogenated alcohol and a 3D printed plastic object which is obtained by the inventive 3D printing process.

3D printing of plastic objects is widely used in the prior art for forming or building up three dimensional objects. As an example, WO 2018/091193 A1 discloses a method for producing a three-dimensional object including the steps of providing a printing structure, which defines an interior, which is produced from a printing material by means of 3D printing; a filling material, which comprises at least one liquid or pasty monomer is introduced into the interior and the monomer is polymerized to form a polymer. Accordingly, the polymerized binder binds the material of the object when forming the 3D structure. Further known is selective laser sintering and multi-jet fusion (MJF) for producing 3D printed objects. Also these processes use a thermal process of locally melting a powdery polymeric plastic material to form the 3D printed object. However, these processes show disadvantages: In these thermally induced processes it is preferred to use thermoplastic plastic materials which show a high difference between the melting temperature and the recrystallization temperature. This limits the choice of the materials significantly. A further disadvantage is the necessary permanent heating of the reaction chamber and the reaction compounds which consumes a lot of energy and which takes long time for the adjustment of the temperature of the 3D printing device. The main problem caused by the thermally induced printing process, however, is the shrinkage or thermal distortion of some materials used for printing the 3D printed objects after cooling which results in inaccurately produced 3D printed objects. A further disadvantage is the waste of the powdery polymeric material which is not fused to the 3D printed object. Such remaining powdery polymeric material is thermally aged due to the permanent heating and can essentially not be recycled and be used in another 3D printing process. Accordingly, 30 wt% to 50 wt% of the powdery polymeric plastic material used in a conventional 3D printing process get lost. The MJF process shows a further disadvantage, i.e. there is often observed an uneven surface on the upper side of the printed object.

In view of the above-mentioned prior art, it is a problem underlying the present invention to provide a 3D printing process of 3D printing a plastic object which is highly effective, which requires a lower amount of energy and which is capable of producing 3D printed objects having an even and smooth surface at low production costs. A further object of the present invention is the provision of a use of at least one halogenated alcohol, which is particularly hexafluoro isopropanol (HFIP in the following). The present invention further provides a solution to the problem of providing a 3D printed object having an even and smooth surface at moderate costs.

The problem is solved by the 3D printing process according to claim 1, the use according to claim 13 and the 3D printed plastic object according to claim 14.

According to the inventive 3D printing process, a 3D printed plastic object is produced having a smooth and even surface. Contrary to all conventionally used thermal fusion-based processes, the present invention uses a solvent-based process which comprises as a first step the application of at least one powdery polymeric plastic material onto a construction platform. The construction platform is not particularly limited but is preferably adjustable in height. Onto said construction platform the powdery polymeric plastic material is applied. Said powdery polymeric plastic material is used for building up the 3D printed object. The powdery polymeric plastic material is arranged on the construction platform in a suitable form and thickness, e.g. in the form of a layer.

As the powdery polymeric plastic material any polymeric plastic material can be used. As described in the following, said polymeric plastic material needs to be soluble in at least one halogenated alcohol to a certain extent at the temperature used in the 3D printing process. According to the present invention at least one powdery polymeric plastic material can be used which means that different powdery polymeric plastic materials can be used separately and thus, can be applied next to each other and/or on top of each other. Alternatively or additively, a blend of different powdery polymeric plastic materials can be used, which may be a blend of one kind of powdery polymeric plastic material, e.g. different polyamides, like e.g. a blend of PA612 and PA6.6, or which may be a blend of different kinds of powdery polymeric plastic materials, i.e. a blend of polyamides and polyketones or the like.

In a further step the at least one halogenated alcohol is applied on the at least one powdery polymeric plastic material using a jetting process. This means that one halogenated alcohol can be used singly or in mixture of two or more halogenated alcohols. The jetting process is not particularly limited and may be carried out using a printing head through which fine droplets of the at least one halogenated alcohol are ejected onto the surface of the powdery polymeric plastic material. The at least one halogenated alcohol dissolves parts of the powdery polymeric plastic material. During reconsolidation of the polymeric plastic material and thus, evaporation of the at least one halogenated alcohol, the former powdery and then dissolved polymeric plastic material fuses and the polymer chains rearrange in a predetermined structure and three-dimensional form.

Further usual additional steps may complete the inventive 3D printing process. For example, after one repetition of the above-described steps, the remaining non-fused powdery polymeric plastic material may be removed, for example by suctioning or by blowing it off the forming 3D printed object. According to another method, the construction platform may simply be repositioned, in particular by lowering the height of the construction platform to an extent corresponding to the height of the powdery polymeric plastic applied in the next application step.

Since the inventive 3D printing process does not involve a melting of the powdery polymeric plastic material, the energy required in the inventive solvent-based process is many times lower than in conventional SLS-processes or MJF-processes. Thus, the costs of the inventive 3D printing process are also very low. Furthermore, any non-fused powdery polymeric plastic material can be reused in another 3D printing process since it has not undergone any structural change or pre-aging. This also saves production costs and makes the inventive 3D printing process highly effective. Furthermore, due to the dissolving of the powdery polymeric plastic material by the at least one halogenated alcohol used, the surface of the formed 3D printed object is even and smooth. During the dissolution, the polymer chains rearrange and said restructuring results in a flat and non-distorted surface of the 3D printed object.

According to a particularly preferred embodiment, the at least one halogenated alcohol comprises or consists of hexafluoro isopropanol (HFIP) which dissolves a plurality of powdery polymeric plastic materials, which is non-toxic and easy to handle.

In order to produce 3D printed objects having a greater height, it is preferred that the foregoing steps, i.e. the application of at least one powdery polymeric plastic material onto a construction platform and the application of at least one halogenated alcohol on the at least one powdery polymeric plastic material using a jetting process are repeated until the plastic object is printed in the desired final form and structure. Said three-dimensional form may for example be designed using a CAD method.

To improve the dissolution of the powdery polymeric plastic material in the at least one halogenated alcohol and thus, to decrease the production time of the 3D printed object, it is preferable that the particle size of the powdery polymeric plastic material, which can be measured using x-ray diffraction, falls within a range of 20 µm to 150 µm, in particular within a range of 30 µm to 80 µm. This particle size is smaller than the particle sizes of powders used in thermic processes of 3D printing an object which, however, is favorable since the powdery polymeric plastic material then shows improved high solubility in the at least one halogenated alcohol.

According to a preferred embodiment the at least one powdery polymeric plastic material is applied onto the construction platform in form of a layer which is easy to form. Said layer further preferably has a thickness of 0.03 mm to 0.5 mm and in particular 0.07 mm to 0.25 mm. When building up a layer of the powdery polymeric plastic material, a layer thickness of 0.03 mm to 0.5 mm, measured in a perpendicular direction to the construction platform, is preferable since the at least one halogenated alcohol which is subsequently jetted onto said layer can penetrate the whole layer so that selected areas of the powdery polymeric plastic material can be fused and bonded throughout the whole layer in a thickness direction thereof. A thickness of the layer of powdery polymeric plastic material ranging from 0.07 mm to 0.25 mm is even more preferable in this view since thus, the droplet size of the at least one halogenated alcohol can be reduced to a minimum which prevents dripping off phenomenons and fusing undesirable areas of the powdery polymeric plastic material which would lead to inaccurately formed 3D printed objects.

For applying the at least one powdery polymeric plastic material onto the construction platform, the use of a doctor blade or a rotating roll is preferable, which are easy to handle and can be varied so that different thicknesses of the at least one powdery polymeric plastic material can be applied.

As an example, the evaporation temperature of HFIP is 58.2 °C, therefore, the HFIP evaporates very fast from the dissolved polymeric plastic material so that the fusion of said powdery polymeric plastic material is quick. However, to regulate the evaporation rate and thus, to accelerate the 3D printing process, the process may further comprise a step of heating the construction platform. From the point of view of controlling the evaporation rate of the at least one halogenated alcohol and thus, influencing the 3D printing and in particular the crystallinity of the forming 3D printed object, the construction platform is preferably tempered at a temperature of 0 °C to 165 °C and more preferably at 20 °C to 100 °C. In particular within the temperature range of 20 °C to 100 °C, a fusion of the dissolved polymeric plastic material layer by layer can be achieved which improves the mechanical properties of the resulting 3D printed plastic object.

Alternatively or additively, the at least one halogenated alcohol may be tempered at a temperature ranging from -3 °C to 57 °C to more easily control the evaporation process of the at least one halogenated alcohol.

According to a further advantageous embodiment, the process may comprise a step of applying ultra sound to the powdery polymeric plastic material to which the at least one halogenated alcohol has been applied. This supports the dissolving of the powdery polymeric plastic material whereby a 3D printed objet having a smoother and more even surface can be obtained.

The production costs of the 3D printed object obtained by the inventive process can be further reduced when the process advantageously comprises a step of recycling the jetted at least one halogenated alcohol by re-liquefying the same. This may be carried out by guiding the gaseous phase of the at least one halogenated alcohol into a cooling trap or the like.

According to a further preferred embodiment, the 3D printing process comprises a step of adsorbing the jetted at least one halogenated alcohol at an activated carbon filter.

To prevent the at least one halogenated alcohol from running undesirably at the edge of the forming 3D printed object into adjacent grains of the powdery polymeric plastic material which are not intended to be fused, it is preferable that an amount of the at least one halogenated alcohol to be applied at outer peripheral contours of the forming object is less than an amount of the at least one halogenated alcohol to be applied at inner contours of the forming object. Respective amounts can be easily selected, for example after some experimental tests.

In view of the above-mentioned advantage, it is further preferred to heat the at least one halogenated alcohol which is applied to outer peripheral contours of the forming object to a temperature higher than the temperature of the at least one halogenated alcohol which is applied to inner portions of the forming object. This embodiment also prevents the at least one halogenated alcohol from dropping off and improves the contours of the forming object.

According to a further preferred embodiment, it is advantageous to apply at peripheral contours of the forming object a mixture of at least one halogenated alcohol and polymeric plastic material, wherein the polymeric plastic material is dissolved in the at least one halogenated alcohol. This increases the viscosity of the dissolving polymeric plastic material so that dropping off can be prevented effectively.

In order to prevent a dropping off or running of the at least one halogenated alcohol into undesirable regions of the powdery polymeric plastic material, the process may further comprise a step of applying a liquid or wax at interfaces outside the forming plastic object.

This means that the liquid or the wax can be applied directly on the construction platform and/or at parts of the powdery polymeric plastic material which do not form part of the forming 3D printed object. As a further option, the liquid or the wax may be applied on top of the 3D printed object after finishing the 3D printing process. This liquid or wax serves as a barrier which the at least one halogenated alcohol cannot pass. By applying the liquid or wax using a jetting process, the shape and form of the forming 3D printed object can be improved and only a very small amount of powdery polymeric plastic material gets lost. When applying the liquid or wax directly on the construction platform and/or in top of the 3D printed object after finishing of the 3D printing process, the 3D printed object will show a smoother lower surface and upper surface due to the immiscibility of the liquid/wax and the at least one halogenated alcohol. Thus, particularly suitable liquids are not soluble in the at least one halogenated alcohol, like e.g. aprotic solvents including alkanes, like e.g. paraffin and the like. Suitable waxes can be selected from paraffin waxes which may be hydroxylated.

According to a further preferred embodiment, the process may comprise a step of applying energy in the form of UV-radiation, microwave radiation, infrared radiation and/or thermal energy. Said energy is applied after the application of the at least one halogenated alcohol to the dissolving powdery polymeric plastic material to improve the dissolution thereof. In this regard it is important that the energy applied to the powdery polymeric plastic material and the applied at least one halogenated alcohol does not lead to a melting of the powdery polymeric plastic material. Therefore, in particular, the temperature of the powdery polymeric plastic material is kept below the melting point of said powdery polymeric plastic material.

Due to the high solution rates in the at least one halogenated alcohol, the powdery polymeric plastic material is preferably selected from the group consisting of: polyamides, wherein in particular PA6, PA 6.6, PA11, PA12, PA4.6, PA1012, PA6-3-T and PA612 are of highest relevance, polyphthalamide (PPA), polybutylene terephthalate (PBT), thermoplastic polyurethane (TPU), polyoxymethylene (POM), polycarbonate (PC), polyethylene terephthalate (PET), polyethylene furanoate (PEF) polyethylene terephthalate glycol (PETG), polyketone (PK), poly(methyl methacrylate) (PMMA), polysulfone (PSU), polyphenylsulfone (PPSU), polyethersulfone (PESU), polyetherimide (PEI), acrylonitrile butydiene styrene (ABS), acrylonitrile styrene acrylate (ASA) and polylactic acid (PLA). By using these plastic materials, either singly or as a blend, the mechanical properties of the 3D printed object can be adjusted. A particularly preferable blend includes PEI and PC.

Accordingly, it is even more preferable that the powdery polymeric plastic material is a blend of two or more powdery polymeric plastic materials.

To further improve the mechanical properties of the 3D printed object obtained by the inventive 3D printing process, the powdery polymeric plastic material may further comprise at least one fibrous material and/or at least one spherical filler, like e.g. glass spheres.

In order to functionalize the 3D printed object, it is further preferable that the at least one halogenated alcohol comprises at least one functional additive. These functional additives can particularly be selected from the group consisting of: a coloring material for selectively coloring one or more layers of the 3D printed object. The coloring material can be e.g. a dye or a pigment. A metallic powder, a ceramic powder or a polymeric powder, like e.g. PTFE or PMSQ which is a silsesquioxane polymer, in particular a nano powder having an average particle size, measured according to ISO 22412:2017 using dynamic light scattering, of 1 nm to 1000 nm and in particular 50 nm to 700 nm can also be used. For stabilizing the 3D printed object against UV radiation, the additive may be a UV absorber. To improve the mechanical stability, the additive can comprise a fibrous material and/or at least one spherical filler. The chemical stability of the 3D printed object can further be improved by using a hydrophobic additive as the additive added to the powdery polymeric plastic material, which may be PTFE or PMSQ. Further suitable is a surface structuring agent, which may be selected from aprotic solvents, like e.g. paraffin or paraffin oil and the like. Since these aprotic solvents are not soluble in the at least one halogenated alcohol, it is preferred to apply these solvents in a separate step singly.

In case of providing the the at least one halogenated alcohol with at least one functional additive, said at least one halogenated alcohol may be applied to predetermined areas of the powdery polymeric plastic material so that the concentration of the functional additive throughout the forming 3D object can be varied selectively. As a preferred embodiment, coloring material is applied at edge regions of the forming object so that the coloring material does not particularly influence the mechanical properties of the forming 3D printed object. Furthermore, by this procedure 3D printed object showing hard and soft segments can be produced.

As a further aspect of the present invention, the use of at least one halogenated alcohol, and in particular of HFIP, for binding a powdery polymeric plastic material in a 3D printing process is described, wherein the at least one halogenated alcohol is applied onto the powdery polymeric plastic material using a jetting process. This use is beneficial in the production of 3D printed objects having an accurate form and shape and requires only a minimum of raw material resources and energy.

A further aspect of the present invention concerns a 3D printed plastic object which is produced using the 3D printing process described above. Due to the production of the 3D printed object by use of the inventive process, a 3D printed object having an accurate shape and form is obtained, even in case of very fine structures in said object. The 3D printed object is produced with a minimum of raw material resources and reduced energy consumption and is thus, is cheaper in this respect than conventional 3D printing processes. Since the process is a solvent-based process in which the powdery polymeric plastic material dissolves in the at least one halogenated alcohol and rearranges in the desired 3D form and shape, the surfaces of the 3D printed object are smooth with only few or even without any distortions or defects. Furthermore, in comparison to conventional heat-controlled 3D printing processes, the 3D printed objects of the present invention show higher z-strength since the at least one halogenated alcohol dissolves the powdery polymeric plastic material throughout the whole thickness of the powdery polymeric plastic material in the z-direction. Furthermore, due to the controlled low temperature in the inventive 3D printing process, the crystallinity of the resulting 3D printed object can be reduced to a minimum which allows the production of highly crystallizing polyamides, like e.g. PA6.6 which cannot be 3D printed using conventional thermal 3D printing processes. The inventive 3D printed objects show no embrittlement.

The advantages, effects and advantageous embodiments of the inventive 3D printing process can be applied to the inventive 3D printed object.

Further details, advantages and characteristics of the present invention are further described with respect to the following embodiment represented by the enclosed figure.

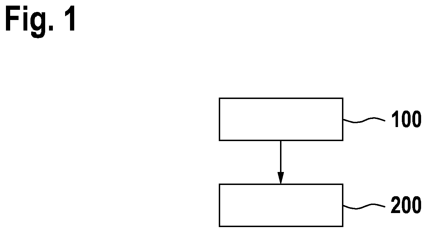

- Fig. 1: is a schematic chart illustrating the process steps of a 3D printing process according to an embodiment of the present invention.

In detail, Figure 1 shows schematically two method steps representing a 3D printing process of 3D printing a 3D printed plastic object.

According to a first step 100 at least one powdery polymeric plastic material is applied onto a construction platform. The construction platform may be any support, like e.g. a plate or a table which can preferably be adjusted in height and which serves as support for the forming 3D printed object.

As the powdery polymeric plastic material, at least one, selected from the group consisting of: PA6, PA612, PA11, PA12, PA4.6, PA1012, PA6-3-T and PA6.6, PPA, PBT, TPU, POM, PC, PET, PEF, PETG, PK, PMMA, PSU, PPSU, PESU, PEI, ABS, ASA, PLA and a blend of PEI and PC is preferable. Said polymeric plastic material may further contain functional additives, like e.g. fibrous material, at least one spherical filler or a coloring material, like e.g. a dye or a pigment.

The powdery polymeric plastic material is applied onto the construction platform in form of a layer having in particular a thickness in the range of 0.03 mm to 0.5 mm which can be obtained by use of a doctor blade or a rotating roll.

In a second step 200, at least one halogenated alcohol is applied on the at least one powdery polymeric plastic material using a jetting process. The form in which the at least one halogenated alcohol is applied to the powdery polymeric plastic material represents the form of the 3D printed object to be produced. When applying the at least one halogenated alcohol to the plastic material, the plastic material which gets in contact with the at least one halogenated alcohol, it dissolves in the at least one halogenated alcohol and during evaporation of the at least one halogenated alcohol, the polymeric plastic material rearranges and the powder particles or grains fuse, thus forming a bonded, continuous polymeric structure. The evaporation rate of the at least one halogenated alcohol may be adjusted by heating the construction platform, e.g. to a temperature of about 70 °C, i.e. below the melting temperature of the powdery polymeric plastic material.

Steps 100 and 200 may be repeated until the plastic object is printed in the desired form. This may be carried out by lowering the height of the construction platform in each repetition to an extent equivalent to the thickness of the powdery polymeric plastic material applied in the next step 100. After the last repetition, remaining non-fused powdery polymeric plastic material may be recycled and reused in another 3D printing process.

Also the vapor of the at least one halogenated alcohol evaporating from the fused polymeric plastic material may be recycled by re-liquefying the at least one halogenated alcohol, e.g. by collecting the same in a cooling trap or by adsorbing the same at a filter, in particular at an activated carbon filter.

As a further method step (not shown), a liquid or wax may be applied onto areas of the powdery polymeric plastic material not intended to be fused by use of a jetting process.

The 3D printing process is easily carried out, does not require high amounts of energy and does not waste raw material resources. The 3D printing process is thus, also highly cost efficient. Furthermore, due to the solvent-based process, the surfaces of the 3D printed object obtained by the 3D printing process are smooth only few or even without any distortions.

In addition to the written description of the present invention, reference is made explicitly to the enclosed Figure 1 without limiting the invention to said embodiment.

### List of reference signs

- 100: process step
- 200: process step

## Claims

1. A 3D printing process of 3D printing a plastic object comprising the steps of:
a) applying at least one powdery polymeric plastic material (100) onto a construction platform and
b) applying at least one halogenated alcohol (200) on the at least one powdery polymeric plastic material using a jetting process.

2. The process of claim 1, wherein the at least one halogenated alcohol comprises or consists of HFIP.

3. The process of claim 1 or 2, wherein steps a) and b) are repeated until the 3D plastic object is printed.

4. The process according to any of the preceding claims, wherein the particle size of the powdery polymeric plastic material is within a range of 20 µm to 150 µm, in particular 30 µm to 80 µm and/or wherein the at least one powdery polymeric plastic material is applied onto the construction platform in form of a layer having a thickness of 0.03 mm to 0.5 mm, in particular 0.07 mm to 0.25 mm.

5. The process according to any of the preceding claims, wherein the at least one powdery polymeric plastic material is applied using a doctor blade or a rotating roll.

6. The process according to any of the preceding claims further comprising a step of tempering the construction platform, wherein the tempering is carried out in a temperature range of 0 °C to 165 °C, in particular in a temperature range of 20 °C to 100 °C and/or wherein the at least one halogenated alcohol is tempered at a temperature ranging from -3 °C to 57 °C.

7. The process according to any of the preceding claims, further comprising a step of applying ultra sound to the powdery polymeric plastic material to which the at least one halogenated alcohol has been applied.

8. The process according to any of the preceding claims further comprising a step of recycling the jetted at least one halogenated alcohol by re-liquefying the same.

9. The process according to claim 8, wherein the recycling of the jetted at least one halogenated alcohol comprises a step of adsorbing the at least one halogenated alcohol at a filter.

10. The process according to any of the preceding claims, wherein an amount of the at least one halogenated alcohol to be applied at outer peripheral contours of the forming object is less than an amount of the at least one halogenated alcohol to be applied at inner contours of the forming object.

11. The process according to any of the preceding claims further comprising a step of applying a liquid or wax at interfaces outside the forming plastic object, wherein in particular, the liquid or wax is applied using a jetting process and/or further comprising a step of applying energy in the form of UV-radiation, microwave radiation, infrared radiation and/or thermal energy.

12. The process according to any of the preceding claims, wherein the powdery polymeric plastic material is selected from the group consisting of: polyamides, in particular PA6, PA612, PA11, PA12, PA4.6, PA1012, PA6-3-T and PA6.6, PPA, PBT, TPU, POM, PC, PET, PEF, PETG, PK, PMMA, PSU, PESU, PPSU, PEI, ABS, ASA, PLA and/or wherein the powdery polymeric plastic material is a blend of two or more powdery polymeric plastic materials, in particular a blend of PEI and PC.

13. The process according to any of the preceding claims, wherein the powdery polymeric plastic material further comprises at least one fibrous material and/or at least one spherical filler and/or wherein the at least one halogenated alcohol further comprises at least one functional additive, wherein in particular, the functional additive is selected from the group consisting of: a coloring material, a metallic powder, a ceramic powder, a polymeric powder, a UV absorber, a fibrous material, a spherical filler, a hydrophobic additive and a surface structuring agent.

14. Use of at least one halogenated alcohol for binding a powdery polymeric plastic material in a 3D printing process, wherein the at least one halogenated alcohol is applied onto the powdery polymeric plastic material using a jetting process.

15. 3D printed plastic object produced using the 3D printing process according to any of claims 1 to 14.
